# EUROPEAN PATENT APPLICATION

(11) **EP 4 268 604 A1**
(43) Date of publication of application: **01.11.2023**
(21) Application number: 21915264.2
(22) Date of filing: 27.12.2021
(51) Int. Cl.: A23L 2/60, A23L 2/52

(54) **BEVERAGE CONTAINING D-ARABINOSE**

(30) Priority: 28.12.2020 JP 2020218273
(71) Applicant: Suntory Holdings Limited, Osaka 530-8203 (JP)
(72) Inventor: UTSUMI Yui, Kawasaki-shi, Kanagawa 211-0067 (JP); OSADA Tomoya, Kawasaki-shi, Kanagawa 211-0067 (JP); NAGAO Koji, Kawasaki-shi, Kanagawa 211-0067 (JP); YOKOO Yoshiaki, Kawasaki-shi, Kanagawa 211-0067 (JP)
(74) Representative: Mewburn Ellis LLP
(86) International application number: PCT/JP2021/048470
(87) International publication number: WO 2022/145404

(57) **Abstract**

There is a demand for the development of a novel beverage containing an alternative sweetener to sugar. The present invention provides a beverage containing 0.1-25 w/v% of D-arabinose.

## Description

### Technical Field

The present invention relates to a beverage containing D-arabinose or a method for producing the same. Additionally, the present invention also relates to a concentrate of the beverage, a sweetener composition containing D-arabinose, and a method for improving a taste quality of a beverage.

### Background Art

Food and drink have been required to have lower calories in addition to a good taste in recent years. This relates to a fact that lifestyle-related diseases such as obesity and diabetes are regarded as a problem. Various sweeteners have been developed as substitutes to sugars (also referred to as sucrose) that have long been in the predominant role as the main sweetener. Sweeteners are roughly classified into two types: carbohydrate sweeteners and non-carbohydrate sweeteners. The carbohydrate sweeteners are classified into sucrose, starch-derived sugars, other sugars, sugar alcohols, and the like, whereas the non-carbohydrate sweeteners are classified into natural sweeteners and synthetic sweeteners, and the like, or into low-intensity sweeteners and high-intensity sweeteners. In recent years, attempts have also been made on a method for producing rare sugars, a kind of non-carbohydrate sweeteners, using a photocatalyst (Patent Literature 1) .

Various beverages containing a sucrose substitute sweetener have been proposed, and different beverages containing D-allulose (also referred to as D-psicose) have been proposed in recent years. For example, Patent Literature 2 discloses a coffee beverage composition containing allulose, an oligosaccharide, and a coffee extract. Further, Patent Literature 3 discloses a carbonated beverage containing predetermined amounts of D-psicose and dextrin.

### Citation List

### Patent Literature

Patent Literature 1: Japanese Patent Laid-Open No. 2018-90555
Patent Literature 2: Japanese Translation of PCT International Application Publication No. 2020-500507
Patent Literature 3: Japanese Patent Laid-Open No. 2020-54280

### Summary of Invention

### Technical Problem

Under the above circumstances, the development of a novel beverage using a substitute sweetener for sugar has been much awaited.

### Solution to Problem

The present inventors have found that a beverage with a good taste quality can be obtained by using D-arabinose in the beverage. The present invention has been accomplished based on this finding.

Thus, the present invention comprises the following embodiments.
[1] A beverage comprising 0.1 to 25 w/v% of D-arabinose.
[2] The beverage according to [1], wherein a content of D-arabinose is 0.5 to 20 w/v%.
[3] The beverage according to [1] or [2], further comprising a high-intensity sweetener.
[4] The beverage according to [3], wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviolmonoside, steviolbioside, stevioside, luo han guo extract, mogroside V, thaumatin, brazzein, Glycyrrhiza extract, saccharine, aspartame, acesulfame K, sucralose, and a combination thereof.
[5] The beverage according to [3] or [4], wherein a content of the high-intensity sweetener is 1 to 1,000 ppm.
[6] The beverage according to any of [1] to [5], further comprising sodium.
[7] The beverage according to [6], wherein a content of the sodium is less than 50 mg/100 ml.
[8] The beverage according to [6] or [7], wherein the sodium is included in at least one form selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptonate, sodium gluconate, sodium glutamate, sodium tartrate, sodium aspartate, sodium lactate, casein sodium, sodium ascorbate, and a mixture thereof.
[9] The beverage according to any of [1] to [8], further comprising a low-intensity sweetener.
[10] The beverage according to [9], wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.
[11] The beverage according to [9] or [10], wherein a content of the low-intensity sweetener is an amount corresponding to a sweetness intensity of 0.1 to 5.9 in terms of sucrose.
[12] The beverage according to any of [1] to [11], wherein an energy is 50 Kcal/100 ml or less.
[13] A 2 to 10-fold concentrate of the beverage according to any of [1] to [12].
[14] A sweetener composition comprising D-arabinose and one or more high-intensity sweeteners.
[15] A method for improving a taste quality of a beverage, comprising adding D-arabinose, a high-intensity sweetener, and sodium to the beverage.

### Advantageous Effects of Invention

According to an embodiment of the present invention, a novel beverage containing D-arabinose as a substitute sweetener for sugar is provided. Further, according to a preferable embodiment of the present invention, a beverage with a good taste quality containing D-arabinose is provided.

### Brief Description of Drawings

Figure 1 is a graph showing the sensory evaluation results in Example 1.
Figure 2 is a graph showing the sensory evaluation results on the low sweetness intensity samples (samples with a sweetness intensity of 1 in terms of sucrose as in control 1) in Example 2.
Figure 3 is a graph showing the sensory evaluation results on the high sweetness intensity samples (samples with a sweetness intensity of 5 in terms of sucrose as in control 2) in Example 2.
Figure 4 is a graph showing the sensory evaluation results on the low sweetness intensity samples (samples with a sweetness intensity of 1 in terms of sucrose as in control 1) in Example 3.
Figure 5 is a graph showing the sensory evaluation results on the high sweetness intensity samples (samples with a sweetness intensity of 5 in terms of sucrose as in control 2) in Example 3.
Figure 6 is a graph showing the sensory evaluation results on the low sweetness intensity samples (samples with a sweetness intensity of 1 in terms of sucrose as in control 1) in Example 4.
Figure 7 is a graph showing the sensory evaluation results on the high sweetness intensity samples (samples with a sweetness intensity of 5 in terms of sucrose as in control 2) in Example 4.
Figure 8 is a graph showing the sensory evaluation results in Example 5.

### Description of Embodiments

Hereinafter, the present invention will be described in detail. The following embodiments are examples to describe the present invention and do not intend to limit the present invention only to these embodiments. The present invention can be carried out in various embodiments without departing from the spirit of the present invention.

Note that all of the literatures, laid-open publications, patent publications, and other patent literatures cited herein shall be incorporated by reference into the present description. The present specification incorporates the contents of the specification and the drawings of Japanese Patent Application (No. 2020-218273), filed on December 28, 2020, from which the present application claims priority.

### 1. Beverage containing D-arabinose

According to an aspect of the present invention, a beverage comprising 0.1 to 25 w/v% of D-arabinose (hereinafter, referred to as "the beverage of the present invention") is provided. In the present description, the "beverage" is a semi-solid, a liquid, or a mixture of these, and a general term for any orally edible things.

### [D-Arabinose]

D-Arabinose is known as a kind of rare sugars that occur in very small quantities in nature, and characteristics thereof have not been studied so much. Under such circumstances, the present inventors have found that a beverage with a good taste quality can be obtained by using D-arabinose in the beverage.

D-Arabinose has the following structure or a cyclic structure corresponding thereto, and is a kind of sugars classified into pentose and aldose. The cyclic structure encompasses five-membered ring and six-membered ring α type and β type. According to the confirmation by the present inventors, D-arabinose has a degree of sweetness of about 0.6 times as much as that of sucrose.

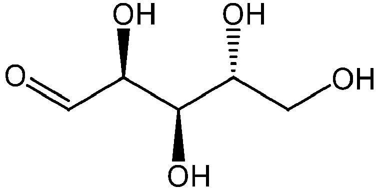

The present inventors found, as demonstrated in the below-described Example 6, that D-arabinose is a sweetener that induces a response through a taste-related molecule other than the sweet taste receptor T1R2/T1R3. It is not desired to be bound by a specific theory, but unlike artificial sweeteners such as sucralose, D-arabinose is considered to exhibit sweetness essentially close to sucrose because it induces a sweetness response as does sucrose even when a sweet taste receptor T1R2/T1R3 is inhibited.

The "··· induces a response through a taste-related molecule other than the sweet taste receptor T1R2/T1R3" means a response (e.g., a sweetness response) can be triggered even if a response (e.g., a sweetness response) through the sweet taste receptor T1R2/T1R3 is inhibited. Whether or not a certain sweet substance can trigger a sweetness response even if a sweetness response through the sweet taste receptor T1R2/T1R3 is inhibited may be determined by, for instance, measuring, by sensory evaluation or cell assay, the sweetness intensity of a solution (control solution), in which only the above sweet substance has been dissolved, and the sweetness intensity (remaining sweetness intensity) of a solution (test solution), in which a sweet taste receptor T1R2/T1R3 inhibitor (e.g., lactisole, gymnemic acid) is added for inhibiting a sweetness response through the sweet taste receptor T1R2/T1R3 to the control solution; and by comparing the sweetness intensity of the control solution and the sweetness intensity of the test solution. For instance, in the below-described Example 6, when 100 ppm of a sweet taste receptor inhibitor lactisole was added to a 8 w/v% sucrose solution, a remaining sweetness intensity is 29.05% due to the addition of inhibitor, based on the sweetness intensity with no addition of an inhibitor of 100%; and therefore, when the residual ratio of sweetness intensity of the sucrose solution is compared, whether a response is induced through a taste-related molecule other than the sweet taste receptor T1R2/T1R3 can be decided.

As an example, a test solution having a sweetness intensity corresponding to the sweetness intensity of a 8 w/v% sucrose solution and containing 100 ppm lactisole as a sweet taste receptor inhibitor is used. In this specific embodiment, a ratio of the remaining sweetness intensity of the test solution to the remaining sweetness intensity of sucrose (e.g., the percentage when the remaining sweetness intensity of sucrose is set to 100%) is, for example, 150 or higher, 20% or higher, or 25% or higher. In this case, this sweet substance can be considered to "induce a response through a taste-related molecule other than the sweet taste receptor T1R2/T1R3".

The "taste-related molecule other than the sweet taste receptor T1R2/T1R3" (sometimes referred to as a "non-T1R2/T1R3 taste-related molecule") refers to a molecule, other than the sweet taste receptor T1R2/T1R3, that can trigger a taste response, in particular, a sweetness response. In some embodiments, the non-T1R2/T1R3 taste-related molecule is expressed on sweet taste receptor T1R2/T1R3-expressing cells (e.g., taste cells), in particular, on their cell surface. In some embodiments, the activity of the non-T1R2/T1R3 taste-related molecule is promoted by sodium and/or glucose, etc. In a specific embodiment, the non-T1R2/T1R3 taste-related molecule is one or more molecules selected from sugar transporters such as GLUTs (e.g., GLUTs 1 to 12, 14, HMIT; in particular, GLUT 2, 4, 8, or 9) and SGLTs (SGLTs 1 to 6, in particular, SGLT 1) and Kir6.1/SUR1 complex. In a more specific embodiment, the non-T1R2/T1R3 taste-related molecule is one or more molecules selected from GLUTs (in particular, GLUT 2, 4, 8, or 9), SGLTs (in particular, SGLT 1), and Kir6.1/SUR1 complex.

The inhibitor of the non-T1R2/T1R3 taste-related molecule is not particularly limited as long as the inhibitor can inhibit the function of the molecule. Examples include: GLUT inhibitors such as phloretin, fasentin, STF31, WZB117, BAY-876, cytochalasin B; and SGLT inhibitors such as phlorizin, sotagliflozin, ipragliflozin, empagliflozin, canagliflozin, dapagliflozin, tofogliflozin, sergliflozin, and luseogliflozin.

D-Arabinose used in the present invention is irrelevant in its origin, and may be an extract from naturally occurring raw materials, or may be a chemically or biologically synthetized substance. For example, D-arabinose may be produced by the method using a photocatalyst as described in Patent Literature 1, or may be purchased from a reagent manufacturer.

The beverage in an embodiment of the present invention contains 0.1 to 25 w/v% of D-arabinose, relative to the total volume of the beverage. As used herein, the "contains 0.1 to 25 w/v% of D-arabinose, relative to the total volume of the beverage" means containing 0.1 to 25 g of D-arabinose per 100 ml of the beverage. In another embodiment of the present invention, an amount (that is, a content) of D-arabinose contained in the beverage may be 0.1 to 20 w/v%, 0.1 to 18 w/v%, 0.1 to 16 w/v%, 0.1 to 14 w/v%, 0.1 to 12 w/v%, 0.1 to 10 w/v%, 0.1 to 9 w/v%, 0.1 to 8 w/v%, 0.1 to 7 w/v%, 0.1 to 6 w/v%, 0.1 to 5 w/v%, 0.1 to 4 w/v%, 0.1 to 3 w/v%, 0.1 to 2 w/v%, 0.1 to 1 w/v%, 0.5 to 20 w/v%, 0.5 to 18 w/v%, 0.5 to 16 w/v%, 0.5 to 14 w/v%, 0.5 to 12 w/v%, 0.5 to 10 w/v%, 0.5 to 9 w/v%, 0.5 to 8 w/v%, 0.5 to 7 w/v%, 0.5 to 6 w/v%, 0.5 to 5 w/v%, 0.5 to 4 w/v%, 0.5 to 3 w/v%, 0.5 to 2 w/v%, 0.5 to 1 w/v%, 0.8 to 20 w/v%, 0.8 to 18 w/v%, 0.8 to 16 w/v%, 0.8 to 14 w/v%, 0.8 to 12 w/v%, 0.8 to 10 w/v%, 0.8 to 9 w/v%, 0.8 to 8 w/v%, 0.8 to 7 w/v%, 0.8 to 6 w/v%, 0.8 to 5 w/v%, 0.8 to 4 w/v%, 0.8 to 3 w/v%, 0.8 to 2 w/v%, 0.8 to 1 w/v%, 1 to 20 w/v%, 1 to 18 w/v%, 1 to 16 w/v%, 1 to 14 w/v%, 1 to 12 w/v%, 1 to 10 w/v%, 1 to 9 w/v%, 1 to 8 w/v%, 1 to 7 w/v%, 1 to 6 w/v%, 1 to 5 w/v%, 1 to 4 w/v%, 1 to 3 w/v%, 1 to 2 w/v%, 2 to 20 w/v%, 2 to 18 w/v%, 2 to 16 w/v%, 2 to 14 w/v%, 2 to 12 w/v%, 2 to 10 w/v%, 2 to 9 w/v%, 2 to 8 w/v%, 2 to 7 w/v%, 2 to 6 w/v%, 2 to 5 w/v%, 2 to 4 w/v%, 2 to 3 w/v%, 3 to 20 w/v%, 3 to 18 w/v%, 3 to 16 w/v%, 3 to 14 w/v%, 3 to 12 w/v%, 3 to 10 w/v%, 3 to 9 w/v%, 3 to 8 w/v%, 3 to 7 w/v%, 3 to 6 w/v%, 3 to 5 w/v%, 3 to 4 w/v%, 4 to 20 w/v%, 4 to 18 w/v%, 4 to 16 w/v%, 4 to 14 w/v%, 4 to 12 w/v%, 4 to 10 w/v%, 4 to 9 w/v%, 4 to 8 w/v%, 4 to 7 w/v%, 4 to 6 w/v%, 4 to 5 w/v%, 5 to 20 w/v%, 5 to 18 w/v%, 5 to 16 w/v%, 5 to 14 w/v%, 5 to 12 w/v%, 5 to 10 w/v%, 5 to 9 w/v%, 5 to 8 w/v%, 5 to 7 w/v%, 5 to 6 w/v%, 6 to 20 w/v%, 6 to 18 w/v%, 6 to 16 w/v%, 6 to 14 w/v%, 6 to 12 w/v%, 6 to 10 w/v%, 6 to 9 w/v%, 6 to 8 w/v%, 6 to 7 w/v%, 7 to 20 w/v%, 7 to 18 w/v%, 7 to 16 w/v%, 7 to 14 w/v%, 7 to 12 w/v%, 7 to 10 w/v%, 7 to 9 w/v%, 7 to 8 w/v%, 8 to 20 w/v%, 8 to 18 w/v%, 8 to 16 w/v%, 8 to 14 w/v%, 8 to 12 w/v%, 8 to 10 w/v%, 8 to 9 w/v%, 9 to 20 w/v%, 9 to 18 w/v%, 9 to 16 w/v%, 9 to 14 w/v%, 9 to 12 w/v%, 9 to 10 w/v%, 10 to 20 w/v%, 10 to 18 w/v%, 10 to 16 w/v%, 10 to 14 w/v%, 10 to 12 w/v%, 12 to 20 w/v%, 12 to 18 w/v%, 12 to 16 w/v%, 12 to 14 w/v%, 14 to 20 w/v%, 14 to 18 w/v%, 14 to 16 w/v%, 16 to 20 w/v%, or 16 to 18 w/v%. In a preferable embodiment of the present invention, an amount of D-arabinose contained in the beverage may be 0.5 to 14 w/v%, 0.8 to 12 w/v%, or 1 to 10 w/ v%.

In another embodiment of the present invention, an amount of D-arabinose contained in the beverage may be 0.1 to 3. 0 w/v%, 0.2 to 3.0 w/v%, 0.4 to 3.0 w/v%, 0.6 to 3.0 w/v%, 0.8 to 3.0 w/v%, 1.0 to 3.0 w/v%, 1.2 to 3.0 w/v%, 1.4 to 3.0 w/v%, 1.6 to 3.0 w/v%, 1.8 to 3.0 w/v%, 2.0 to 3.0 w/v%, 2.2 to 3.0 w/v%, 2.4 to 3.0 w/v%, 2.6 to 3.0 w/v%, 2.8 to 3.0 w/v%, 0.1 to 2.5 w/v%, 0.2 to 2.5 w/v%, 0.4 to 2.5 w/v%, 0.6 to 2.5 w/v%, 0.8 to 2.5 w/v%, 1.0 to 2.5 w/v%, 1.2 to 2.5 w/v%, 1.4 to 2.5 w/v%, 1.6 to 2.5 w/v%, 1.8 to 2.5 w/v%, 2.0 to 2.5 w/v%, 2.2 to 2.5 w/v%, 2.4 to 2.5 w/v%, 0.1 to 2.0 w/v%, 0.2 to 2.0 w/v%, 0.4 to 2.0 w/v%, 0.6 to 2.0 w/v%, 0.8 to 2.0 w/v%, 1.0 to 2.0 w/v%, 1.2 to 2.0 w/v%, 1.4 to 2.0 w/v%, 1.6 to 2.0 w/v%, 1.8 to 2.0 w/v%, 0.1 to 1.8 w/v%, 0.2 to 1.8 w/v%, 0.4 to 1.8 w/v%, 0.6 to 1.8 w/v%, 0.8 to 1.8 w/v%, 1.0 to 1.8 w/v%, 1.2 to 1.8 w/v%, 1.4 to 1.8 w/v%, or 1.6 to 1.8 w/v%. In a preferable embodiment of the present invention, an amount of D-arabinose contained in the beverage may be 0.2 to 2.5 w/v%, 0.6 to 2.0 w/v%, or 0.8 to 1.8 w/ v%.

The amount of D-arabinose contained in the beverage of the present invention can be measured by a high performance liquid chromatography. When the amount of D-arabinose blended in the beverage has been revealed, the value calculated from such a blended amount may be used.

### [High-intensity sweetener]

The beverage in an embodiment of the present invention may further contain a high-intensity sweetener. The high-intensity sweetener means a compound having a more intense sweetness than sucrose and encompasses naturally occurring compounds, synthetic compounds, and combinations of naturally occurring compounds and synthetic compounds. The high-intensity sweetener has, in the same amount as sucrose, a sweetness 5 times or more, 10 times or more, 50 times or more, 100 times or more, 500 times or more, 1,000 times or more, 5,000 times or more, 10,000 times or more, 50,000 times or more, and 100,000 times or more, of that of sucrose.

Specific examples of the high-intensity sweetener include peptide-based sweeteners such as aspartame, neotame, and advantame, for example, sucrose derivatives such as sucralose, for example, synthetic sweeteners such as acesulfame K, saccharine, saccharin sodium, sodium cyclamate, dulcin, disodium glycyrrhizin, trisodium glycyrrhizin, and neohesperidin dihydrochalcone (including those naturally occurring but also those whose synthetic products are mostly distributed such as neohesperidin dihydrochalcone), for example, sweeteners extracted from plants such as thaumatin, monellin, curculin, mabinlin, brazzein, pentagin, hernandulcin, 4β-hydroxyhernandulcin, miraculin, glycyrrhizin, rubusoside, and phyllodulcin, and plant extracts containing a high-intensity sweetener component, for example, Stevia rebaudiana extract, Luo han guo extract, Glycyrrhiza glabra extract, Rubus suavissimus S. Lee extract, Hydrangea macrophylla var. thunbergii extract, Sclerochiton ilicifolius extract, Thaumataococcus daniellii Benth extract, Dioscoreophyllum volkensii (serendipity berry) extract, Curculigo latifolia extract, Richadella dulcifica (miracle fruit) extract, Pentadiplandra brazzeana (West African fruit) extract, Capparis masaikai (Mabinlang) extract, Lippia dulcis (Aztec sweet herb) extract, sweet components in these extracts, for example, steviol glycosides such as stevia derivatives like enzymatically-treated stevia in which a stevia extract and stevia are treated with an enzyme and glucose is added thereto, mogrosides obtained by treating Luo han guo and a Luo han guo extract, glycosides obtained from plant extracts such as phyllodulcin glycosides, Glycyrrhiza glabra plant-containing sweet components (for example, triterpene glycosides such as glycyrrhizin), Rubus suavissimus S. Lee plant-containing sweet components (for example, diterpene glycosides such as rubusoside), Hydrangea macrophylla var. thunbergii plant-containing sweet components (for example, dihydroisocoumarin such as phyllodulcin), Sclerochiton ilicifolius plant-containing sweet components (for example, amino acids such as monatin), Thaumataococcus daniellii Benth plant-containing sweet components (for example, proteins such as thaumatin), Dioscoreophyllum volkensii plant-containing sweet components (for example, proteins such as monellin), Curculigo latifolia plant-containing sweet components (for example, proteins such as curculin), Richadella dulcifica plant-containing sweet components (for example, proteins such as miraculin), Pentadiplandra brazzeana plant-containing sweet components (for example, proteins such as brazzein and pentagin), Capparis masaikai plant-containing sweet components (for example, proteins such as mabinlin), and Lippia dulcis plant-containing sweet components (for example, sesquiterpenes such as hernandulcin and 4β-hydroxyhernandulcin).

Examples of the steviol glycoside include rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviol, steviolmonoside, steviolbioside, and stevioside. Examples of the mogroside include mogroside IV and mogroside V.

The Glycyrrhiza extract refers to those obtained from roots or rhizomes of Glycyrrhiza uralensis Fisher, Glycyrrhiza inflata Batalin, and Glycyrrhiza glabra Linne and having glycyrrhizic acid as the main component. Examples of the Glycyrrhiza extract include Glycyrrhiza extracts, Glycyrrhizin, and licorice extracts.

The sucrose derivative includes, for example, those obtained by substituting the OH group or the H group of sucrose with other substituents and examples thereof include halogen derivatives of sucrose (sucralose), and oxathiazinonedioxide derivatives.

In a preferable embodiment of the present invention, the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviolmonoside, steviolbioside, stevioside, luo han guo extract, mogroside V, thaumatin, brazzein, Glycyrrhiza extract, saccharine, aspartame, acesulfame K, sucralose, and a combination thereof.

The content of the high-intensity sweetener contained in the beverage in an embodiment of the present invention may be 1 to 1,000 ppm in percent by weight, relative to the total weight of the beverage. In other embodiments of the present invention, the content of the high-intensity sweetener may be, in percent by weight, relative to the total weight of the beverage, about 20 to about 800 ppm, about 25 to about 800 ppm, about 30 to about 800 ppm, about 35 to about 800 ppm, about 40 to about 800 ppm, about 45 to about 800 ppm, about 50 to about 800 ppm, about 55 to about 800 ppm, about 20 to about 750 ppm, about 25 to about 750 ppm, about 30 to about 750 ppm, about 35 to about 750 ppm, about 40 to about 750 ppm, about 45 to about 750 ppm, about 50 to about 750 ppm, about 55 to about 750 ppm, about 20 to about 700 ppm, about 25 to about 700 ppm, about 30 to about 700 ppm, about 35 to about 700 ppm, about 40 to about 700 ppm, about 45 to about 700 ppm, about 50 to about 700 ppm, about 55 to about 700 ppm, about 20 to about 650 ppm, about 25 to about 650 ppm, about 30 to about 650 ppm, about 35 to about 650 ppm, about 40 to about 650 ppm, about 45 to about 650 ppm, about 50 to about 650 ppm, about 55 to about 650 ppm, about 20 to about 600 ppm, about 25 to about 600 ppm, about 30 to about 600 ppm, about 35 to about 600 ppm, about 40 to about 600 ppm, about 45 to about 600 ppm, about 50 to about 600 ppm, about 55 to about 600 ppm, about 20 to about 550 ppm, about 25 to about 550 ppm, about 30 to about 550 ppm, about 35 to about 550 ppm, about 40 to about 550 ppm, about 45 to about 550 ppm, about 50 to about 550 ppm, about 55 to about 550 ppm, about 20 to about 540 ppm, about 25 to about 540 ppm, about 30 to about 540 ppm, about 35 to about 540 ppm, about 40 to about 540 ppm, about 45 to about 540 ppm, about 50 to about 540 ppm, about 55 to about 540 ppm, about 20 to about 530 ppm, about 25 to about 530 ppm, about 30 to about 530 ppm, about 35 to about 530 ppm, about 40 to about 530 ppm, about 45 to about 530 ppm, about 50 to about 530 ppm, about 55 to about 530 ppm, about 20 to about 520 ppm, about 25 to about 520 ppm, about 30 to about 520 ppm, about 35 to about 520 ppm, about 40 to about 520 ppm, about 45 to about 520 ppm, about 50 to about 520 ppm, about 55 to about 520 ppm, about 20 to about 510 ppm, about 25 to about 510 ppm, about 30 to about 510 ppm, about 35 to about 510 ppm, about 40 to about 510 ppm, about 45 to about 510 ppm, about 50 to about 510 ppm, about 55 to about 510 ppm, about 20 to about 505, about 25 to about 505, about 30 to about 505, about 35 to about 505, about 40 to about 505, about 45 to about 505, about 50 to about 505, about 55 to about 505, about 20 to about 500 ppm, about 25 to about 500 ppm, about 30 to about 500 ppm, about 35 to about 500 ppm, about 40 to about 500 ppm, about 45 to about 500 ppm, about 50 to about 500 ppm, about 55 to about 500 ppm, about 20 to about 495, about 25 to about 495, about 30 to about 495, about 35 to about 495, about 40 to about 495, about 45 to about 495, about 50 to about 495, about 55 to about 495, about 20 to about 490 ppm, about 25 to about 490 ppm, about 30 to about 490 ppm, about 35 to about 490 ppm, about 40 to about 490 ppm, about 45 to about 490 ppm, about 50 to about 490 ppm, about 55 to about 490 ppm, about 100 to about 500 ppm, about 100 to about 450 ppm, about 100 to about 400 ppm, about 100 to about 350 ppm, about 100 to about 300 ppm, about 100 to about 250 ppm, about 100 to about 200 ppm, about 150 to about 500 ppm, about 150 to about 450 ppm, about 150 to about 400 ppm, about 150 to about 350 ppm, about 150 to about 300 ppm, about 150 to about 250 ppm, about 150 to about 200 ppm, about 20 to about 200 ppm, about 200 to about 500 ppm, about 200 to about 450 ppm, about 200 to about 400 ppm, about 200 to about 350 ppm, about 200 to about 300, or about 200 to about 250. In other embodiments of the present invention, the amount of the high-intensity sweetener may be about 20 to about 600 ppm, about 30 to about 550 ppm, about 55 to about 490 ppm, about 20 to about 200 ppm, about 100 to about 500 ppm, or about 150 to about 350 ppm. The amount of the high-intensity sweetener contained in the beverage of the present invention can be measured by a high performance liquid chromatography. When the amount of the high-intensity sweetener blended in the beverage has been revealed, the value calculated from such a blended amount may be used.

### [Sodium]

The beverage in an embodiment of the present invention may further contain sodium. In a preferable embodiment of the present invention, the content of sodium is less than 50 mg/100 ml. This means that the content of sodium atom is less than 50 mg/100 ml. Depending on an embodiment, the content may be 0.1 mg/100 ml or more and less than 50 mg/100 ml, 0.1 to 45 mg/100 ml, 0.1 to 40 mg/100 ml, 0.1 to 35 mg/100 ml, 0.1 to 30 mg/100 ml, 0.1 to 25 mg/100 ml, 0.1 to 20 mg/100 ml, 0.1 to 19 mg/100 ml, 0.1 to 18 mg/100 ml, 0.1 to 17 mg/100 ml, 0.1 to 16 mg/100 ml, 0.1 to 15 mg/100 ml, 0.1 to 14 mg/100 ml, 0.1 to 13 mg/100 ml, 0.1 to 12 mg/100 ml, 0.1 to 11 mg/100 ml, 0.1 to 10 mg/100 ml, 1 mg/100 ml or more and less than 50 mg/100 ml, 1 to 45 mg/100 ml, 1 to 40 mg/100 ml, 1 to 35 mg/100 ml, 1 to 30 mg/100 ml, 1 to 25 mg/100 ml, 1 to 20 mg/100 ml, 1 to 19 mg/100 ml, 1 to 18 mg/100 ml, 1 to 17 mg/100 ml, 1 to 16 mg/100 ml, 1 to 15 mg/100 ml, 1 to 14 mg/100 ml, 1 to 13 mg/100 ml, 1 to 12 mg/100 ml, 1 to 11 mg/100 ml, 1 to 10 mg/100 ml, 5 mg/100 ml or more and less than 50 mg/100 ml, 5 to 45 mg/100 ml, 5 to 40 mg/100 ml, 5 to 35 mg/100 ml, 5 to 30 mg/100 ml, 5 to 25 mg/100 ml, 5 to 20 mg/100 ml, 5 to 19 mg/100 ml, 5 to 18 mg/100 ml, 5 to 17 mg/100 ml, 5 to 16 mg/100 ml, 5 to 15 mg/100 ml, 5 to 14 mg/100 ml, 5 to 13 mg/100 ml, 5 to 12 mg/100 ml, 5 to 11 mg/100 ml, 5 to 10 mg/100 ml, 7 mg/100 ml or more and less than 50 mg/100 ml, 7 to 45 mg/100 ml, 7 to 40 mg/100 ml, 7 to 35 mg/100 ml, 7 to 30 mg/100 ml, 7 to 25 mg/100 ml, 7 to 20 mg/100 ml, 7 to 19 mg/100 ml, 7 to 18 mg/100 ml, 7 to 17 mg/100 ml, 7 to 16 mg/100 ml, 7 to 15 mg/100 ml, 10 mg/100 ml or more and less than 50 mg/100 ml, 10 to 45 mg/100 ml, 10 to 40 mg/100 ml, 10 to 35 mg/100 ml, 10 to 30 mg/100 ml, 10 to 25 mg/100 ml, 10 to 20 mg/100 ml, 10 to 19 mg/100 ml, 10 to 18 mg/100 ml, 10 to 17 mg/100 ml, 10 to 16 mg/100 ml, 10 to 15 mg/100 ml, 15 mg/100 ml or more and less than 50 mg/100 ml, 15 to 45 mg/100 ml, 15 to 40 mg/100 ml, 15 to 35 mg/100 ml, 15 to 30 mg/100 ml, 15 to 25 mg/100 ml, 15 to 20 mg/100 ml, 20 mg/100 ml or more and less than 50 mg/100 ml, 20 to 45 mg/100 ml, 20 to 40 mg/100 ml, 20 to 35 mg/100 ml, 20 to 30 mg/100 ml, 20 to 25 mg/100 ml, 25 mg/100 ml or more and less than 50 mg/100 ml, 25 to 45 mg/100 ml, 25 to 40 mg/100 ml, 25 to 35 mg/100 ml, or 25 to 30 mg/100 ml.

Further, the content of sodium may be, depending on an embodiment, 0.1 to 22 mg/100 ml, 0.1 to 21 mg/100 ml, 1 to 22 mg/100 ml, 1 to 21 mg/100 ml, 4 to 40 mg/100 ml, 4 to 35 mg/100 ml, 4 to 34 mg/100 ml, 4 to 33 mg/100 ml, 4 to 32 mg/100 ml, 4 to 31 mg/100 ml, 4 to 30 mg/100 ml, 4 to 29 mg/100 ml, 4 to 26 mg/100 ml, 4 to 25 mg/100 ml, 4 to 22 mg/100 ml, 4 to 21 mg/100 ml, 4 to 20 mg/100 ml, 4 to 19 mg/100 ml, 4 to 18 mg/100 ml, 4 to 17 mg/100 ml, 4 to 16 mg/100 ml, 4 to 15 mg/100 ml, 4 to 14 mg/100 ml, 4 to 13 mg/100 ml, 4 to 12 mg/100 ml, 4 to 11 mg/100 ml, 4 to 10 mg/100 ml, 5 to 34 mg/100 ml, 5 to 33 mg/100 ml, 5 to 32 mg/100 ml, 5 to 31 mg/100 ml, 5 to 29 mg/100 ml, 5 to 22 mg/100 ml, 5 to 21 mg/100 ml, 10 to 34 mg/100 ml, 10 to 33 mg/100 ml, 10 to 32 mg/100 ml, 10 to 31 mg/100 ml, 10 to 29 mg/100 ml, 10 to 22 mg/100 ml, 10 to 21 mg/100 ml, 11.5 to 34 mg/100 ml, 11.5 to 33 mg/100 ml, 11.5 to 32 mg/100 ml, 11.5 to 31 mg/100 ml, 11.5 to 30 mg/100 ml, 11.5 to 29 mg/100 ml, 11.5 to 22 mg/100 ml, 11.5 to 21 mg/100 ml, 11.5 to 20 mg/100 ml, 11.5 to 19 mg/100 ml, 11.5 to 18 mg/100 ml, 11.5 to 17 mg/100 ml, 11.5 to 16 mg/100 ml, 11.5 to 15 mg/100 ml, 11.5 to 14 mg/100 ml, 11.5 to 13 mg/100 ml, 11.5 to 12 mg/100 ml, 5.75 to 34.5 mg/100 ml, 5.75 to 28.75 mg/100 ml, 5.75 to 23 mg/100 ml, 5.75 to 17.25 mg/100 ml, 5.75 to 11.5 mg/100 ml, 11.5 to 34.5 mg/100 ml, 11.5 to 28.75 mg/100 ml, 11.5 to 23 mg/100 ml, 11.5 to 17.25 mg/100 ml, 17.25 to 34.5 mg/100 ml, 17.25 to 28.75 mg/100 ml, 17.25 to 23 mg/100 ml, 23 to 34.5 mg/100 ml, 23 to 28.75 mg/100 ml, or 28.75 to 34.5 mg/100 ml.

Additionally, the amount of sodium when added to the beverage may be, relative to 100 ml of the beverage, 0.1 to 50 mg, 0.1 to 45 mg, 0.1 to 40 mg, 0.1 to 35 mg, 0.1 to 30 mg, 0.1 to 25 mg, 0.1 to 20 mg, 0.1 to 19 mg, 0.1 to 18 mg, 0.1 to 17 mg, 0.1 to 16 mg, 0.1 to 15 mg, 0.1 to 14 mg, 0.1 to 13 mg, 0.1 to 12 mg, 0.1 to 11 mg, 0.1 to 10 mg, 1 to 50 mg, 1 to 45 mg, 1 to 40 mg, 1 to 35 mg, 1 to 30 mg, 1 to 25 mg, 1 to 20 mg, 1 to 19 mg, 1 to 18 mg, 1 to 17 mg, 1 to 16 mg, 1 to 15 mg, 1 to 14 mg, 1 to 13 mg, 1 to 12 mg, 1 to 11 mg, 1 to 10 mg, 5 to 50 mg, 5 to 45 mg, 5 to 40 mg, 5 to 35 mg, 5 to 30 mg, 5 to 25 mg, 5 to 20 mg, 5 to 19 mg, 5 to 18 mg, 5 to 17 mg, 5 to 16 mg, 5 to 15 mg, 5 to 14 mg, 5 to 13 mg, 5 to 12 mg, 5 to 11 mg, 5 to 10 mg, 7 to 50 mg, 7 to 45 mg, 7 to 40 mg, 7 to 35 mg, 7 to 30 mg, 7 to 25 mg, 7 to 20 mg, 7 to 19 mg, 7 to 18 mg, 7 to 17 mg, 7 to 16 mg, 7 to 15 mg, 10 to 50 mg, 10 to 45 mg, 10 to 40 mg, 10 to 35 mg, 10 to 30 mg, 10 to 25 mg, 10 to 20 mg, 10 to 19 mg, 10 to 18 mg, 10 to 17 mg, 10 to 16 mg, 10 to 15 mg, 15 to 50 mg, 15 to 45 mg, 15 to 40 mg, 15 to 35 mg, 15 to 30 mg, 15 to 25 mg, 15 to 20 mg, 20 to 50 mg, 20 to 45 mg, 20 to 40 mg, 20 to 35 mg, 20 to 30 mg, 20 to 25 mg, 25 to 50 mg, 25 to 45 mg, 25 to 40 mg, 25 to 35 mg, or 25 to 30 mg.

The form of sodium is not particularly limited as long as it is contained in the beverage of the present invention in an ingestible condition, but may be contained in at least one form selected from the group consisting of, for example, sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptonate, sodium gluconate, sodium glutamate (or monosodium glutamate), sodium tartrate, sodium aspartate (or monosodium aspartate), sodium lactate, casein sodium, sodium ascorbate, and a mixture thereof.

When sodium is contained in a base beverage, the sodium derived from this base beverage is encompassed in the sodium contained in the beverage of the present invention.

In an embodiment of the present invention, the sodium derived from sodium components used as preservatives (e.g., sodium benzoate, sodium sulfite, sodium hyposulfite, sodium dehydroacetate, sodium metabisulfite, and sodium propionate) is not encompassed as the sodium contained in the beverage of the present invention.

In the present specification, the content of sodium in the beverage can be measured by atomic absorption spectrometry. When the amount of the sodium-containing compound contained in the beverage has been revealed, the value calculated from such a contained amount may be used.

### [Low-intensity sweetener]

The beverage in an embodiment of the present invention may further contain a low-intensity sweetener. The low-intensity sweetener means a compound having about the same degree of sweetness as that of sucrose (for example, less than 5 times, about 0.1 to 2 times, and about 0.5 to 1.5 times that of sucrose). Nonrestrictive examples of the low-intensity sweetener include low-intensity sugar sweeteners such as sucrose, a high-fructose corn syrup, glucose, fructose, lactose, maltose, xylose, lactulose, fructooligosaccharides, maltooligosaccharides, isomaltooligosaccharides, galactooligosaccharides, Coupling Sugar^{(R)}, and palatinose, sugar alcohol low-intensity sweeteners such as maltitol, sorbitol, erythritol, xylitol, lactitol, palatinit, reduced starch saccharified products. Further, the low-intensity sweetener includes rare sugars, caloric sweeteners, non-caloric sweeteners, carbohydrate sweeteners, non-carbohydrate sweeteners, natural sweeteners, and artificial sweeteners, as long as a degree of sweetness is within the above ranges.

In an embodiment of the present invention, the low-intensity sweetener contains a sweetener selected from hexose, pentose, tetrose, a polysaccharide having a terminal sugar of aldose or ketose, sugar alcohols, and a combination thereof. In other embodiments of the present invention, the low-intensity sweetener contains at least one selected from the group consisting of glucose, sucrose, fructose, maltose, an oligosaccharide, a high-fructose corn syrup, lactose, psicose, allose, tagatose, and a combination thereof. In further other embodiments of the present invention, the low-intensity sweetener contains a sweetener selected from glucose, sucrose, fructose, and a combination thereof.

The content of the low-intensity sweetener contained in the beverage of an embodiment of the present invention may be, relative to the total volume of the beverage, 0.1 to 20 w/v%, 0.1 to 15 w/v%, 0.1 to 10 w/v%, 0.1 to 5 w/v%, 0.1 to 1 w/v%, 0.5 to 20 w/v%, 0.5 to 15 w/v%, 0.5 to 10 w/v%, 0.5 to 5 w/v%, 0.5 to 1 w/v%, 0.8 to 20 w/v%, 0.8 to 15 w/v%, 0.8 to 10 w/v%, 0.8 to 5 w/v%, 0.8 to 1 w/v%, 1 to 20 w/v%, 1 to 15 w/v%, 1 to 10 w/v%, 1 to 5 w/v%, 2 to 20 w/v%, 2 to 15 w/v%, 2 to 10 w/v%, 2 to 5 w/v%, 3 to 20 w/v%, 3 to 15 w/v%, 3 to 10 w/v%, 3 to 5 w/v%, 4 to 20 w/v%, 4 to 15 w/v%, 4 to 10 w/v%, 4 to 5 w/v%, 5 to 20 w/v%, 5 to 15 w/v%, 5 to 10 w/v%, 6 to 20 w/v%, 6 to 15 w/v%, 6 to 10 w/v%, 7 to 20 w/v%, 7 to 15 w/v%, 7 to 10 w/v%, 8 to 20 w/v%, 8 to 15 w/v%, 8 to 10 w/v%, 9 to 20 w/v%, 9 to 15 w/v%, 10 to 20 w/v%, 10 to 15 w/v%, 12 to 20 w/v%, 12 to 15 w/v%, 14 to 20 w/v%, or 14 to 15 w/v%. The content of the low-intensity sweetener contained in the beverage can be measured by a high performance liquid chromatography. When the amount of the low-intensity sweetener blended in the beverage has been revealed, the value calculated from such a blended amount may be used.

The content of the low-intensity sweetener contained in the beverage of another embodiment of the present invention may be an amount corresponding to a sweetness intensity of 0.1 to 5.9 in terms of sucrose. In other preferable embodiments of the present invention, the content of the low-intensity sweetener contained in the beverage may be a sweetness intensity in terms of sucrose of 0.1 to 1.0, 0.1 to 1.5, 0.1 to 2.0, 0.1 to 2.5, 0.1 to 3.0, 0.1 to 3.5, 0.1 to 4.0, 0.1 to 4.5, 0.1 to 5.0, 0.1 to 5.5, 0.5 to 0.5, 0.5 to 1.0, 0.5 to 1.5, 0.5 to 2.0, 0.5 to 2.5, 0.5 to 3.0, 0.5 to 3.5, 0.5 to 4.0, 0.5 to 4.5, 0.5 to 5.0, 0.5 to 5.5, 1.0 to 0.5, 1.0 to 1.0, 1.0 to 1.5, 1.0 to 2.0, 1.0 to 2.5, 1.0 to 3.0, 1.0 to 3.5, 1.0 to 4.0, 1.0 to 4.5, 1.0 to 5.0, 1.5 to 0.5, 1.5 to 1.0, 1.5 to 1.5, 1.5 to 2.0, 1.5 to 2.5, 1.5 to 3.0, 1.5 to 3.5, 1.5 to 4.0, 1.5 to 4.5, 1.5 to 5.0, 1.5 to 5.5, 2.0 to 0.5, 2.0 to 1.0, 2.0 to 1.5, 2.0 to 2.0, 2.0 to 2.5, 2.0 to 3.0, 2.0 to 3.5, 2.0 to 4.0, 2.0 to 4.5, 2.0 to 5.0, 2.0 to 5.5, 2.5 to 0.5, 2.5 to 1.0, 2.5 to 1.5, 2.5 to 2.0, 2.5 to 2.5, 2.5 to 3.0, 2.5 to 3.5, 2.5 to 4.0, 2.5 to 4.5, 2.5 to 5.0, 2.5 to 5.5, 3.0 to 3.5, 3.0 to 4.0, 3.0 to 4.5, 3.0 to 5.0, or 3.0 to 5.5.

The "sweetness intensity" means an intensity of sweetness of a substance. For example, when the sweetness intensity of sucrose per unit concentration Brix 1 is defined as a degree of sweetness of 1, a degree of sweetness of glucose is, as shown in Table 1, 0.6 to 0.7 (median value 0.65). A numerical value obtained by multiplying the degree of sweetness by a concentration Brix value of glucose is the sweetness intensity of glucose in terms of sucrose. Thus, when a concentration of glucose in terms of sucrose is Brix 1.5, the sweetness intensity of glucose is 0.65 x 1.5 = 0.975. The sweetness intensity of a sweetener in terms of sucrose can be calculated from a degree of sweetness shown in the following table or a value of a known degree of sweetness.

**Table 1**

| Sugar (D-form) | Degree of sweetness |
|---|---|
| Sucrose | 1 |
| Glucose | 0.6 to 0.7 |
| Fructose | 1.3 to 1.7 |
| Maltose | 0.4 |
| Fructooligosaccharide | 0.6 |
| Maltooligosaccharide | 0.3 |
| Isomaltooligosaccharide | 0.4 to 0.5 |
| Galactooligosaccharide | 0.7 |
| High-fructose corn syrup | 0.8 to 0.9 |
| Lactose | 0.2 to 0.3 |
| Allose | 0.8 |
| Tagatose | 0.9 |

For example, when the sweetness intensity of sucrose per unit concentration Brix 1 is defined as a degree of sweetness of 1, a degree of sweetness of rebaudioside D is about 200 to 250 (median value 225), a degree of sweetness of rebaudioside M is about 200 to 260 (median value 230), a degree of sweetness of rebaudioside B is about 325, a degree of sweetness of rebaudioside A is about 200 to 300 (median value 250), a degree of sweetness of rebaudioside N is about 200 to 250 (median value 225), a degree of sweetness of rebaudioside O is about 200 to 250 (median value 225), a degree of sweetness of rebaudioside E is about 70 to 80 (median value 75), a degree of sweetness of a Luo han guo extract (containing 40% of Mog V) is about 110 to 150 (median value 130), a degree of sweetness of mogroside V is about 240 to 300 (median value 270), and a degree of sweetness of thaumatin is about 2,000, and a degree of sweetness of brazzein is about 500 to 2,000 (median value 1,250). The numerical value obtained by multiplying these degrees of sweetness by a concentration (w/v% (considered to be the same as w/w% in the case of a beverage)) of the high-intensity sweetener in a fruit juice beverage is a sweetness intensity of the high-intensity sweetener. The relative ratio in degrees of sweetness of various sweeteners to the degree of sweetness of 1 of sucrose can be determined from a known sugar sweetness conversion table, and the like. In the present description, when a degree of sweetness is shown in a numerical value range, the median value may be used. However, a sweetener having different values in a degree of sweetness by literatures, a relative ratio in a degree of sweetness to the degree of sweetness of 1 of sucrose can be defined by a sensory test. Examples of such a sensory test include a method in which samples were prepared by adding sucrose having a sweetness intensity of Brix 3.0 to 5.0 in 0.5 increments to pure water, and of which a sucrose-added sample having a sweetness intensity equal to an aqueous solution of a sweetener in a predetermined concentration is selected. Additionally, for a sweetener with a variable degree of sweetness as a sweetness intensity increases, degrees of sweetness in different concentrations are actually measured and plotted whereby a degree of sweetness in a predetermined concentration may be calculated from the obtained approximate curve.

### [Other components]

The beverage of the present invention can suitably contain an antioxidant (sodium erythorbate or the like), an emulsifier (sucrose esters of fatty acids, sorbitan esters of fatty acids, polyglycerin esters of fatty acids or the like), an acidulant (phosphoric acid, citric acid, malic acid or the like), and a flavor, as long as the effects of the present invention are not impaired.

An energy (total energy) of the beverage in an embodiment of the present invention may be 50 Kcal/100 ml or less. An energy of the beverage in other embodiments of the present invention can be, depending on an embodiment, 0 to 50 Kcal/100 ml, 0 to 45 Kcal/100 ml, 0 to 40 Kcal/100 ml, 0 to 35 Kcal/100 ml, 0 to 30 Kcal/100 ml, 0 to 24 Kcal/100 ml, 0 to 22 Kcal/100 ml, 0 to 20 Kcal/100 ml, 0 to 15 Kcal/100 ml, 0 to 10 Kcal/100 ml, 0 to 5 Kcal/100 ml, 0.1 to 50 Kcal/100 ml, 0.1 to 45 Kcal/100 ml, 0.1 to 40 Kcal/100 ml, 0.1 to 35 Kcal/100 ml, 0.1 to 30 Kcal/100 ml, 0.1 to 24 Kcal/100 ml, 0.1 to 22 Kcal/100 ml, 0.1 to 20 Kcal/100 ml, 0.1 to 15 Kcal/100 ml, 0.1 to 10 Kcal/100 ml, 0.1 to 5 Kcal/100 ml, 1 to 50 Kcal/100 ml, 1 to 45 Kcal/100 ml, 1 to 40 Kcal/100 ml, 1 to 35 Kcal/100 ml, 1 to 30 Kcal/100 ml, 1 to 24 Kcal/100 ml, 1 to 22 Kcal/100 ml, 1 to 20 Kcal/100 ml, 1 to 15 Kcal/100 ml, 1 to 10 Kcal/100 ml, 1 to 5 Kcal/100 ml, 5 to 50 Kcal/100 ml, 5 to 45 Kcal/100 ml, 5 to 40 Kcal/100 ml, 5 to 35 Kcal/100 ml, 5 to 30 Kcal/100 ml, 5 to 24 Kcal/100 ml, 5 to 20 Kcal/100 ml, 5 to 15 Kcal/100 ml, 5 to 10 Kcal/100 ml, 10 to 50 Kcal/100 ml, 10 to 45 Kcal/100 ml, 10 to 40 Kcal/100 ml, 10 to 35 Kcal/100 ml, 10 to 30 Kcal/100 ml, 10 to 24 Kcal/100 ml, 10 to 20 Kcal/100 ml, 10 to 15 Kcal/100 ml, 15 to 50 Kcal/100 ml, 15 to 45 Kcal/100 ml, 15 to 40 Kcal/100 ml, 15 to 35 Kcal/100 ml, 15 to 30 Kcal/100 ml, 15 to 24 Kcal/100 ml, 15 to 20 Kcal/100 ml, 20 to 50 Kcal/100 ml, 20 to 45 Kcal/100 ml, 20 to 40 Kcal/100 ml, 20 to 35 Kcal/100 ml, 20 to 30 Kcal/100 ml, 20 to 24 Kcal/100 ml, 24 to 50 Kcal/100 ml, 24 to 45 Kcal/100 ml, 24 to 40 Kcal/100 ml, 24 to 35 Kcal/100 ml, or 24 to 30 Kcal/100 ml. An energy of a sweet substance or an alcohol is already known or can be determined by measuring a content by HPLC or the like and calculating by multiplying the content by an energy conversion factor, or measuring a heat of physical combustion using a calorie meter (for example, bomb calorimeter) and correcting the heat with a digestion-absorption rate, an excreted heat or the like.

The sweetness intensity in terms of sucrose of the beverage in an embodiment of the present invention may be 0.5 to 20, and may also be 0.5 to 15, 0.5 to 12.5, 0.5 to 10, 0.5 to 6.0, 0.5 to 4.0, 1.0 to 20, 1.0 to 15, 1.0 to 12.5, 1.0 to 10, 1.0 to 6.0, 1.0 to 4.0, 4.0 to 20, 4.0 to 15, 4.0 to 12.5, 4.0 to 10, 4.0 to 6.0, 4.5 to 20, 4.5 to 15, 4.5 to 12.5, 4.5 to 10, 5.0 to 20, 5.0 to 15, 5.0 to 12.5, 5.0 to 10, 5.5 to 20, 5.5 to 15, 5.5 to 12.5, 5.5 to 10, 6.0 to 20, 6.0 to 15, 6.0 to 12.5, 6.0 to 10, 6.5 to 20, 6.5 to 15, 6.5 to 12.5, 6.5 to 10, 7.0 to 20, 7.0 to 15, 7.0 to 12.5, 7.0 to 10, 7.5 to 20, 7.5 to 15, 7.5 to 12.5, 7.5 to 10, 7.5 to 9, 7.5 to 8, 8.0 to 20, 8.0 to 20, 8.0 to 15, 8.0 to 12.5, 8.0 to 10, 8.5 to 20, 8.5 to 15, 8.5 to 12.5, 8.5 to 10, 9.0 to 20, 9.0 to 15, 9.0 to 12.5, 9.0 to 10, 9.5 to 20, 9.5 to 15, 9.5 to 12.5, 9.5 to 10, 10.0 to 20, 10.0 to 15, 10.0 to 12.5, 10.5 to 20, 10.5 to 15, or 10.5 to 12.5.

The kind of beverage of the present invention is not particularly limited, and may be any of an alcoholic beverage or non-alcoholic beverage. Examples of the non-alcoholic beverage include non-alcoholic beers, malt beverages, probiotic beverages, cocoas, isotonic beverages, nutrient beverages, tea-based beverages, coffee beverages, carbonated beverages, functional beverages, fruit- and vegetable-based beverages, milk-based beverages, soymilk beverages, flavored waters, and jelly beverages, but not limited thereto.

The beverage of the present invention may be prepared as a container-packed beverage while heat sterilized and packed in a container. The container is not particularly limited, and examples include PET bottle, aluminum can, steel can, carton, chilled cup, bottle. When performing heat sterilization, the kind of method is not particularly limited, and heat sterilization can be carried out by a routine technique such as UHT sterilization and retort sterilization. The temperature of heat sterilizing step is not particularly limited and is, for example, 65 to 130°C, and preferably 85 to 120°C, for 10 to 40 minutes. However, the sterilization at an appropriate temperature for several seconds, for example 5 to 30 seconds, is not a problem as long as a sterilization value equal to the above conditions can be obtained.

Further, in the beverage in a preferable embodiment of the present invention, a taste quality improvement effect of the beverage can be provided. For example, in the beverage in an embodiment of the present invention, it is preferable that at least one of "quickness in sweetness onset", "sweetness intensity", "lingering sweet aftertaste", "bitterness intensity", and "lingering bitter aftertaste" is improved. In a preferable embodiment of the present invention, a combination of D-arabinose, a high-intensity sweetener, and sodium improves at least one of "quickness in sweetness onset", "sweetness intensity", and "lingering bitter aftertaste."

### Illustrative embodiment of the present invention

Illustrative embodiments of the present invention are described below, but the present invention is not limited to the following embodiments.

According to an embodiment of the present invention,
there is provided a beverage comprising 0.1 to 25 w/v% of D-arabinose,
further comprising a high-intensity sweetener,
wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviolmonoside, steviolbioside, stevioside, and a combination thereof.

According to an embodiment of the present invention,
there is provided a beverage comprising 0.1 to 25 w/v%, 0.5 to 20 w/v%, 0.8 to 18 w/v%, or 1 to 16 w/v% of D-arabinose,
further comprising a high-intensity sweetener, and
comprising 0.1 mg/100 ml or more and less than 50 mg/100 ml, 1 to 40 mg/100 ml, 5 to 20 mg/100 ml, or 7 to 15 mg/100 ml of sodium.

According to another embodiment of the present invention,
there is provided a beverage comprising 0.1 to 25 w/v%, 0.5 to 20 w/v%, 0.8 to 18 w/v%, or 1 to 16 w/v% of D-arabinose,
further comprising a high-intensity sweetener comprising at least one selected from the group consisting of rebaudioside A, rebaudioside D, rebaudioside M, and a combination thereof, and 0.1 mg/100 ml or more and less than 50 mg/100 ml, 1 to 40 mg/100 ml, 5 to 20 mg/100 ml, or 7 to 15 mg/100 ml of sodium.

According to another embodiment of the present invention,
there is provided a beverage comprising 0.1 to 25 w/v%, 0.5 to 20 w/v%, 0.8 to 18 w/v%, or 1 to 16 w/v% of D-arabinose,
further comprising a high-intensity sweetener comprising at least one selected from the group consisting of rebaudioside A, rebaudioside D, rebaudioside M, and a combination thereof,
comprising 0.1 mg/100 ml or more and less than 50 mg/100 ml, 1 to 40 mg/100 ml, 5 to 20 mg/100 ml, or 7 to 15 mg/100 ml of sodium, and
further comprising a low-intensity sweetener.

### 2. Method for producing a beverage

According to an aspect of the present invention, a method for producing the beverage of the present invention described above (hereinafter, referred to as "the production method of the present invention") is provided. The production method of the present invention is not particularly limited as long as the beverage of the present invention containing D-arabinose can be obtained. The raw materials may be added to the beverage separately, or the raw materials may be mixed in advance and added to the beverage.

According to a production method in an aspect of the present invention, "D-arabinose", "high-intensity sweetener", "sodium", and "low-intensity sweetener" are defined as described in the above section "1. Beverage containing D-arabinose."

### 3. Concentrate of the beverage

According to an aspect of the present invention, a concentrate for providing the beverage of the present invention described above (hereinafter, also referred to as "the concentrate of the present invention") is provided. According to an embodiment of the present invention, the concentrate of the present invention is a 2 to 10-fold concentrate for providing the beverage of the present invention, and may be, for example, 2 to 9-fold, 2 to 8-fold, 2 to 7-fold, 2 to 6-fold, 2 to 5-fold, 2 to 4-fold, 2 to 3-fold, 3 to 10-fold, 3 to 9-fold, 3 to 8-fold, 3 to 7-fold, 3 to 6-fold, 3 to 5-fold, 3 to 4-fold, 4 to 10-fold, 4 to 9-fold, 4 to 8-fold, 4 to 7-fold, 4 to 6-fold, 4 to 5-fold, 5 to 10-fold, 5 to 9-fold, 5 to 8-fold, 5 to 7-fold, or 5 to 6-fold. The concentrate of the present invention can be obtained by dissolving raw materials in a small volume of liquid in advance, or a known method such as freeze concentration.

The concentrate of the present invention is to be the beverage of the present invention when diluted to a predetermined ratio. For example, the concentrate of the present invention can be used as a syrup or an undiluted solution in a beverage. In this instance, the concentrate can be diluted 2-fold, 3-fold, 4-fold, 5-fold, 6-fold, 7-fold, 8-fold, 9-fold, or 10-fold and used. When diluting, water and carbonated water can be used. The concentrate of the present invention is preferable in the aspects of preservability and transportability because it is concentrated. The concentrate of the present invention can be solid or liquid.

A concentrate in an embodiment of the present invention may further contain sodium. The amount of sodium contained in a concentrate in an embodiment of the present invention can be adjusted by concentration ratio of the concentrate. For example, when the concentrate is a 2 to 10-fold concentrate for providing the beverage of the present invention, the amount of sodium contained in the concentrate can be 2 to 10 times the amount contained in the beverage of the present invention.

In a concentrate of an aspect of the present invention, "D-arabinose", "high-intensity sweetener", "sodium", and "low-intensity sweetener" are defined as in the above section "1. Beverage containing D-arabinose".

### 4. Sweetener composition

According to an aspect of the present invention, a sweetener composition containing D-arabinose and one or more high-intensity sweeteners (hereinafter, also referred to as "the sweetener composition of the present invention")) is provided. The sweetener composition of the present invention can be directly added to food and drink. The composition of the present invention may be liquid, semi-solid, or solid.

The amount of D-arabinose contained in the sweetener composition of the present invention is not particularly limited, and may be, relative to the total amount of the sweetener composition, for example, 1 wt% to 99 wt%, 5 wt% to 95 wt%, 10 wt% to 90 wt%, 15 wt% to 85 wt%, 20 wt% to 80 wt%, 25 wt% to 75 wt%, 30 wt% to 70 wt%, 35 wt% to 65 wt%, 40 wt% to 60 wt%, 45 wt% to 55 wt%, 1 wt% to 5 wt%, 1 wt% to 10 wt%, 1 wt% to 15 wt%, 1 wt% to 20 wt%, 1 wt% to 25 wt%, 1 wt% to 30 wt%, 1 wt% to 35 wt%, 1 wt% to 40 wt%, 1 wt% to 45 wt%, or 1 wt% to 50 wt%.

A sweetener composition in an embodiment of the present invention may comprise, as the high-intensity sweetener, at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviolmonoside, steviolbioside, stevioside, luo han guo extract, mogroside V, thaumatin, brazzein, Glycyrrhiza extract, saccharine, aspartame, acesulfame K, sucralose, and a combination thereof. Preferably, the composition may contain at least one selected from the group consisting of rebaudioside A, rebaudioside D, rebaudioside M, and a combination thereof.

In a sweetener composition in an embodiment of the present invention, the composition ratio of D-arabinose to the high-intensity sweetener is not particularly limited and may be, for example, in terms of weight ratio (D-arabinose: high-intensity sweetener), 1000:1 to 10:1, 900:1 to 20:1, 800:1 to 30:1, 700:1 to 40:1, 600:1 to 50:1, 500:1 to 60:1, 400:1 to 70:1, 300:1 to 80:1, 200:1 to 90:1, or 150:1 to 100:1. Further, the glycoside of the present invention may be used singly or in plurality. Additionally, these high-intensity sweeteners may be used singly or in plurality.

A sweetener composition in an embodiment of the present invention may further contain sodium. The form of sodium is not particularly limited as long as it is contained in the beverage of the present invention in an eatable condition, but may be contained in at least one form selected from the group consisting of, for example, sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptonate, sodium gluconate, sodium glutamate (or monosodium glutamate), sodium tartrate, sodium aspartate (or monosodium aspartate), sodium lactate, casein sodium, sodium ascorbate, and a mixture thereof.

A sweetener composition in an embodiment of the present invention may further contain a low-intensity sweetener. The low-intensity sweetener may be at least one selected from the group consisting of glucose, sucrose, fructose, maltose, an oligosaccharide, a high-fructose corn syrup, lactose, psicose, allose, tagatose, and a combination thereof. These sweet components may be used singly or in plurality.

In a sweetener composition in an aspect of the present invention, "D-arabinose", "high-intensity sweetener", "sodium", and "low-intensity sweetener" are defined as described in the above section "1. Beverage containing D-arabinose."

### 5. Method for improving a taste quality of a beverage

According to an aspect of the present invention, a method for improving a taste quality of a beverage (hereinafter, also referred to as "the taste quality improving method of the present invention") is provided. According to the taste quality improving method of the present invention, it is preferable that at least one of "quickness in sweetness onset", "sweetness intensity", "lingering sweet aftertaste", "bitterness intensity", and "lingering bitter aftertaste" is improved. In a preferable embodiment of the present invention, a combination of D-arabinose, a high-intensity sweetener, and sodium improves at least one of "quickness in sweetness onset", "sweetness intensity", and "lingering bitter aftertaste."

The taste quality improving method of the present invention includes adding D-arabinose, a high-intensity sweetener, and sodium to the beverage. The amount of D-arabinose contained in the beverage is as described in the above section "1. Beverage containing D-arabinose". Further, the amount and kind of the high-intensity sweetener and sodium contained in the beverage are also as described in the section "1. Beverage containing D-arabinose". In the taste quality improving method of the present invention, D-arabinose, the high-intensity sweetener, and sodium may be added separately, or these raw materials may be mixed in advance and then added to the beverage.

In the taste quality improving method in an aspect of the present invention, "D-arabinose", "high-intensity sweetener", "sodium", and "low-intensity sweetener" are defined as described in the above section "1. Beverage containing D-arabinose."

In the present description, the term "at least" means that the number of specific items may be that given number or more. Further, in the present application, the term "about" means that a subject matter is in ranges of ±25%, ±10%, ±5%, ±3%, ±2%, or ±1%, of the numerical value following the "about". For example, "about 10" means a range from 7.5 to 12.5.

### Examples

Hereinafter, the present invention will be specifically described in reference with examples but the present invention is not limited to the following examples.

### [Example 1] Basic taste quality evaluation on D-allulose and D-arabinose

### Experimental method

D-Allulose (D-psicose, purity 99% or more) and D-arabinose (purity 98.0% or more) were dissolved in pure water in the ratios shown in Table 2 to prepare sample solutions A and B. Using a 6% sucrose solution as a control solution, the sweetness qualities of these sample solutions were evaluated based on the evaluation items of "quickness in sweetness onset", "sweetness intensity", "lingering sweet aftertaste", "bitterness intensity" and "lingering bitter aftertaste". In each evaluation item, the rating on a scale of -3 point to 3 point was performed, with the case where there is no difference from the control solution being 0. Quicker in sweetness onset, higher sweetness intensity, shorter lingering sweet aftertaste, lower bitterness intensity, and shorter lingering bitter aftertaste compared to the control were rated near 3 points. Slower in sweetness onset, lower sweetness intensity, longer lingering sweet aftertaste, higher bitterness intensity, and longer lingering bitter aftertaste compared to the control were rated near -3 points. That is, the closer to 0 point, the closer to the control. The evaluation was carried out by those (4 persons) who received sensory trainings as panelists by spitting test. The amount of a sweet substance contained in each sample solution was adjusted to be equal to the control solution on the calculation. Specifically, the sweetness intensity of each sample solution was designed to be about the same degree, with the degree of sweetness of D-allulose being 0.7 times as much as that of sucrose and the degree of sweetness of D-arabinose being 0.6 times as much as that of sucrose. The energy (kcal/100 ml) was calculated from the amount of the sweetener added.

**Table 2**

| Content | A | B | Control |
|---|---|---|---|
| D-Allulose (w/v%) | 8.57 | 0 | 0 |
| D-Arabinose (w/v%) | 0 | 10 | 0 |
| Sucrose (w/v%) | 0 | 0 | 6 |
| Energy amount (Kcal/100 ml) | 0 | 0 | 24 |

### Results

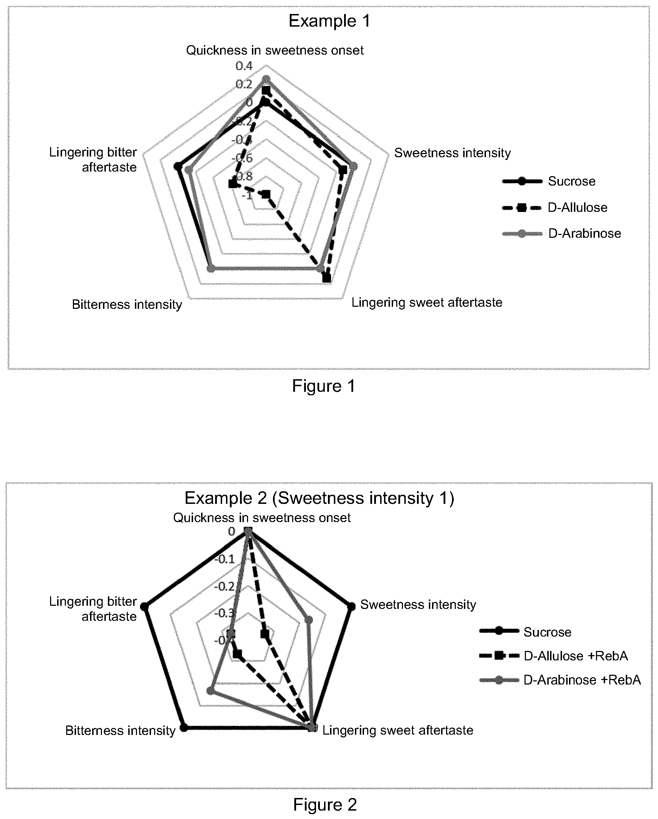

The results are organized in Figure 1 and Table 3. The aqueous solutions containing D-arabinose had lower bitterness intensity and shorter lingering bitter aftertaste with the taste quality closer to sucrose than the aqueous solutions containing D-allulose.

**Table 3**

| | Sucrose | D-Allulose | D-Arabinose |
|---|---|---|---|
| Quickness in sweetness onset | 0 | 0.125 | 0.250 |
| Sweetness intensity | 0 | -0.125 | 0 |
| Lingering sweet aftertaste | 0 | 0.125 | 0 |
| Bitterness intensity | 0 | -1 | 0 |
| Lingering bitter aftertaste | 0 | -0.625 | -0.125 |

### [Example 2] Evaluation on D-allulose and D-arabinose in combination with Reb A

### Experimental method

D-Allulose (D-psicose, purity 99% or more), D-arabinose (purity 98.0% or more), and rebaudioside A (RebA) (purity 95% or more) were dissolved in pure water in the ratios shown in Table 4 to prepare sample solutions A to D. Using a 1% sucrose solution for sample solutions A and B, and a 5% sucrose solution for sample solutions C and D as control solutions (control solutions 1 and 2, respectively), the sweetness qualities of these sample solutions were evaluated based on the evaluation items of "quickness in sweetness onset", "sweetness intensity", "lingering sweet aftertaste", "bitterness intensity" and "lingering bitter aftertaste". In each evaluation item, the rating on a scale of -3 point to 3 point was performed, with the case where there is no difference from the control solutions being 0. Quicker in sweetness onset, higher sweetness intensity, shorter lingering sweet aftertaste, lower bitterness intensity, and shorter lingering bitter aftertaste compared to the control were rated near 3 points. Slower in sweetness onset, lower sweetness intensity, longer lingering sweet aftertaste, higher bitterness intensity, and longer lingering bitter aftertaste compared to the control were rated near -3 points. That is, the closer to 0 point, the closer to the controls. The evaluation was carried out by those (3 persons) who received sensory trainings as panelists by spitting test. The amount of a sweet substance contained in each sample solution was adjusted so that the sweetness intensity of each sample solution was equal to that of the control solution on the calculation. Specifically, the sweetness intensity of each sample solution was designed to be about the same degree, with the degree of sweetness of D-allulose being 0.7 times as much as that of sucrose, the degree of sweetness of D-arabinose being 0.6 times as much as that of sucrose, and the degrees of sweetness of Red A at sweetness intensities of 0.3 and 4.3 being 100 times and 190.5 times as much as that of sucrose, respectively. The energy (kcal/100 ml) was calculated from the amount of the raw materials added, with the Reb A energy being 0.

**Table 4**

| Content | A | B | C | D | Control 1 | Control 2 |
|---|---|---|---|---|---|---|
| D-Allulose (w/v%) | 1 | 0 | 1 | 0 | 0 | 0 |
| D-Arabinose (w/v%) | 0 | 1.165 | 0 | 1.165 | 0 | 0 |
| RebA (ppm) | 30 | 30 | 210 | 210 | 0 | 0 |
| Sucrose (w/v%) | 0 | 0 | 0 | 0 | 1 | 5 |
| Energy amount (Kcal/100 ml) | 0 | 0 | 0 | 0 | 4 | 20 |

### Results

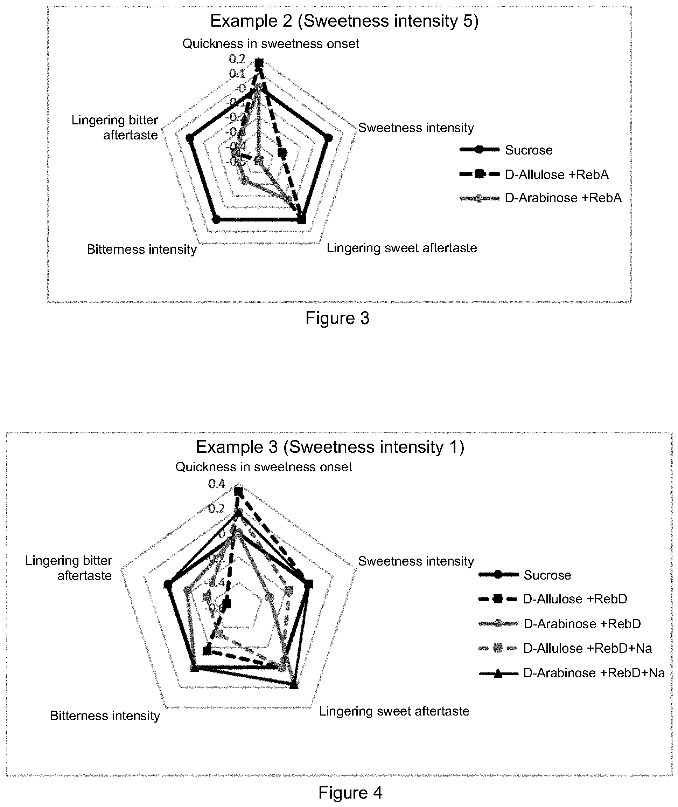

The results are organized in Figures 2 and 3 and Tables 5 and 6. In both of the samples with low sweetness intensities (the samples having a sweetness intensity in terms of sucrose of 1 as control 1) and the samples with high sweetness intensities (the samples having a sweetness intensity in terms of sucrose of 5 as control 2), the more advantage in the bitterness intensity was confirmed in those with D-arabinose than with D-allulose.

**Table 5**

| | A D-Allulose + Reb A | B D-Arabinose + Reb A | Control 1 |
|---|---|---|---|
| Quickness in sweetness onset | 0 | 0 | 0 |
| Sweetness intensity | -0.333 | -0.167 | 0 |
| Lingering sweet aftertaste | 0 | 0 | 0 |
| Bitterness intensity | -0.333 | -0.167 | 0 |
| Lingering bitter aftertaste | -0.333 | -0.333 | 0 |

**Table 6**

| | C D-Allulose + Reb A | D D-Arabinose + Reb A | Control 2 |
|---|---|---|---|
| Quickness in sweetness onset | 0.167 | 0 | 0 |
| Sweetness intensity | -0.333 | -0.500 | 0 |
| Lingering sweet aftertaste | 0 | -0.167 | 0 |
| Bitterness intensity | -0.500 | -0.333 | 0 |
| Lingering bitter aftertaste | -0.333 | -0.333 | 0 |

### [Example 3] Evaluation on D-allulose and D-arabinose in combination with Reb D and sodium

### Experimental method

D-Allulose (D-psicose, purity 99% or more), D-arabinose (purity 98.0% or more), rebaudioside D (Reb D) (purity 95% or more), and sodium gluconate (manufactured by FUSO CHEMICAL CO., LTD.) were dissolved in pure water in the ratios shown in Table 7 to prepare sample solutions A to H. Using a 1% sucrose solution for sample solutions A to D, and a 5% sucrose solution for sample solutions E to H as control solutions (control solutions 1 and 2, respectively), the sweetness qualities of these sample solutions were evaluated based on the evaluation items of "quickness in sweetness onset", "sweetness intensity", "lingering sweet aftertaste", "bitterness intensity" and "lingering bitter aftertaste". In each evaluation item, the rating on a scale of -3 point to 3 point was performed, with the case where there is no difference from the control solutions being 0. Quicker in sweetness onset, higher sweetness intensity, shorter lingering sweet aftertaste, lower bitterness intensity, and shorter lingering bitter aftertaste compared to the control were rated near 3 points. Slower in sweetness onset, lower sweetness intensity, longer lingering sweet aftertaste, higher bitterness intensity, and longer lingering bitter aftertaste compared to the control were rated near -3 points. That is, the closer to 0 point, the closer to the controls. The evaluation was carried out by those (3 persons) who received sensory trainings as panelists by spitting test. The amount of a sweet substance contained in each sample solution was adjusted so that the sweetness intensity of each sample solution was equal to that of the control solution on the calculation. Specifically, the sweetness intensity of each sample solution was designed to be about the same degree, with the degree of sweetness of D-allulose being 0.7 times as much as that of sucrose, the degree of sweetness of D-arabinose being 0.6 times as much as that of sucrose, and the degrees of sweetness of Red D at sweetness intensities of 0.3 and 4.3 being 100 times and 190.5 times as much as that of sucrose, respectively. In the following table, "Cont." means the "control". The sodium contents in the beverages were calculated from the amount of sodium gluconate added. The energy was calculated from the amount of the raw materials added, with the energy of Reb A and sodium gluconate being 0.

**Table 7**

| Content | A | B | C | D | E | F | G | H | Cont. 1 | Cont. 2 |
|---|---|---|---|---|---|---|---|---|---|---|
| D-Allulose (w/v%) | 1 | 1 | 0 | 0 | 1 | 1 | 0 | 0 | 0 | 0 |
| D-Arabinose (w/v%) | 0 | 0 | 1.165 | 1.165 | 0 | 0 | 1.165 | 1.165 | 0 | 0 |
| Reb D (ppm) | 30 | 30 | 30 | 30 | 210 | 210 | 210 | 210 | 0 | 0 |
| Sucrose (w/v%) | 0 | 0 | 0 | 0 | 0 | 0 | 0 | 0 | 1 | 5 |
| Sodium gluconate (mM) | 0 | 5 | 0 | 5 | 0 | 5 | 0 | 5 | 0 | 0 |
| Sodium amount (mg/100 ml) | 0 | 11.5 | 0 | 11.5 | 0 | 11.5 | 0 | 11.5 | 0 | 0 |
| Energy amount (Kcal/100 ml) | 0 | 0 | 0 | 0 | 0 | 0 | 0 | 0 | 4 | 20 |

### Results

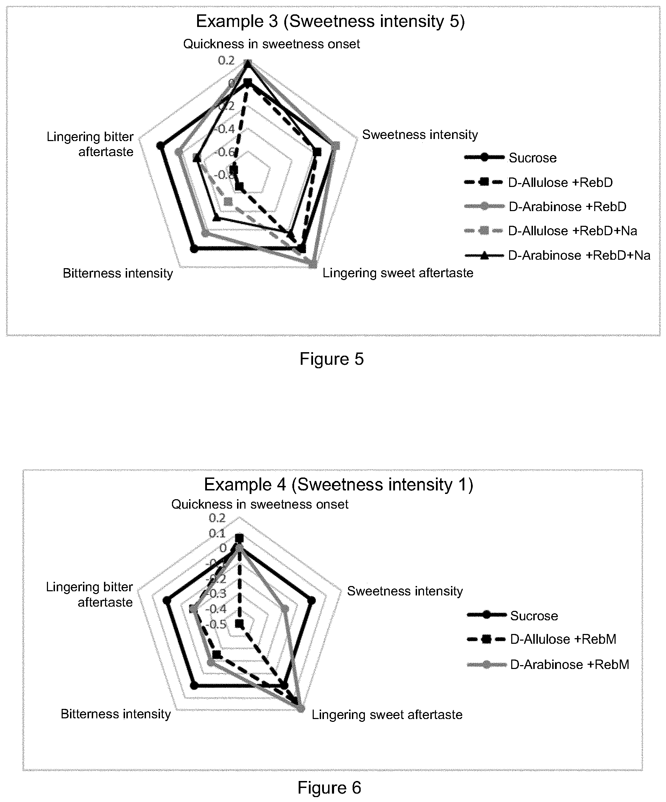

The results are organized in Figures 4 and 5 and Tables 8 and 9. In the following table, "Cont." means the "control". In both of the samples with low sweetness intensities (the samples having a sweetness intensity in terms of sucrose of 1 as control 1) and the samples with high sweetness intensities (the samples having a sweetness intensity in terms of sucrose of 5 as control 2), the more advantage in the bitterness intensity was confirmed in those with D-arabinose than with D-allulose. Additionally, in the samples with low sweetness intensities, improvements by the combination of D-arabinose, Reb D, and Na were confirmed in "quickness in sweetness onset", "sweetness intensity", and "lingering bitter aftertaste".

**Table 8**

| | A D-Allulose + Reb D | C D-Arabinose + Reb D | B D-Allulose + Reb D + Na | D D-Arabinose + Reb D + Na | Cont. 1 |
|---|---|---|---|---|---|
| Quickness in sweetness onset | 0.333 | 0 | 0.167 | 0.167 | 0 |
| Sweetness intensity | 0 | -0.333 | -0.167 | 0 | 0 |
| Lingering sweet aftertaste | 0 | 0.167 | 0 | 0.167 | 0 |
| Bitterness intensity | -0.167 | 0 | -0.333 | 0 | 0 |
| Lingering bitter aftertaste | -0.500 | -0.167 | -0.333 | 0 | 0 |

**Table 9**

| | E D-Allulose + Reb D | G D-Arabinose + Reb D | F D-Allulose + Reb D + Na | H D-Arabinose + Reb D + Na | Cont. 2 |
|---|---|---|---|---|---|
| Quickness in sweetness onset | 0 | 0.167 | 0.167 | 0.167 | 0 |
| Sweetness intensity | -0.167 | 0 | 0 | -0.167 | 0 |
| Lingering sweet aftertaste | 0 | 0.167 | 0.167 | -0.167 | 0 |
| Bitterness intensity | -0.667 | -0.167 | -0.500 | -0.333 | 0 |
| Lingering bitter aftertaste | -0.667 | -0.167 | -0.333 | -0.333 | 0 |

### [Example 4] Evaluation on D-allulose and D-arabinose in combination with Reb M

### Experimental method

D-Allulose (D-psicose, purity 99% or more), D-arabinose (purity 98.0% or more), and rebaudioside M (Reb M) (purity 95% or more) were dissolved in pure water in the ratios shown in Table 10 to prepare sample solutions A to D. Using a 1% sucrose solution for sample solutions A and B, and a 5% sucrose solution for sample solutions C and D as control solutions (control solutions 1 and 2, respectively), the sweetness qualities of these sample solutions were evaluated based on the evaluation items of "quickness in sweetness onset", "sweetness intensity", "lingering sweet aftertaste", "bitterness intensity" and "lingering bitter aftertaste". In each evaluation item, the rating on a scale of -3 point to 3 point was performed, with the case where there is no difference from the control solutions being 0. Quicker in sweetness onset, higher sweetness intensity, shorter lingering sweet aftertaste, lower bitterness intensity, and shorter lingering bitter aftertaste compared to the control were rated near 3 points. Slower in sweetness onset, lower sweetness intensity, longer lingering sweet aftertaste, higher bitterness intensity, and longer lingering bitter aftertaste compared to the control were rated near -3 points. That is, the closer to 0 point, the closer to the controls. The evaluation was carried out by those (3 persons) who received sensory trainings as panelists by spitting test. The amount of a sweet substance contained in each sample solution was adjusted so that the sweetness intensity of each sample solution was equal to that of the control solution on the calculation. Specifically, the sweetness intensity of each sample solution was designed to be about the same degree, with the degree of sweetness of D-allulose being 0.7 times as much as that of sucrose, the degree of sweetness of D-arabinose being 0.6 times as much as that of sucrose, and the degrees of sweetness of Red M at sweetness intensities of 0.3 and 4.3 being 100 times and 190.5 times as much as that of sucrose, respectively. The energy (kcal/100 ml) was calculated from the amount of the raw materials added, with Reb M energy being 0.

**Table 10**

| Content | A | B | C | D | Control 1 | Control 2 |
|---|---|---|---|---|---|---|
| D-Allulose (w/v%) | 1 | 0 | 1 | 0 | 0 | 0 |
| D-Arabinose (w/v%) | 0 | 1.165 | 0 | 1.165 | 0 | 0 |
| Reb M (ppm) | 30 | 30 | 210 | 210 | 0 | 0 |
| Sucrose (w/v%) | 0 | 0 | 0 | 0 | 1 | 5 |
| Energy amount (Kcal/100 ml) | 0 | 0 | 0 | 0 | 4 | 20 |

### Results

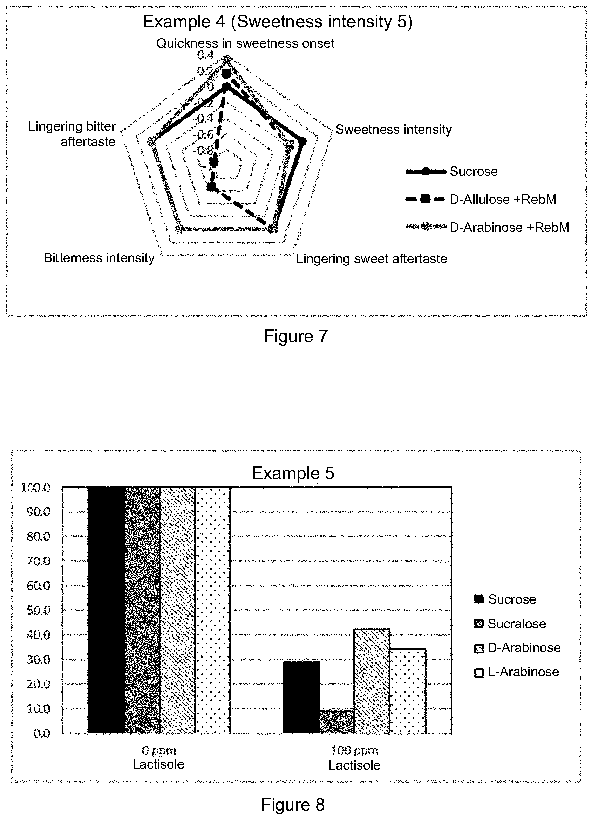

The results are organized in Figures 6 and 7 and Tables 11 and 12. In both of the samples with low sweetness intensities (the samples having a sweetness intensity in terms of sucrose of 1 as control 1) and the samples with high sweetness intensities (the samples having a sweetness intensity in terms of sucrose of 5 as control 2), the more advantage in the bitterness intensity was confirmed in those with D-arabinose than with D-allulose.

**Table 11**

| | A D-Allulose + Reb M | B D-Arabinose + Reb M | Control 1 |
|---|---|---|---|
| Quickness in sweetness onset | 0.063 | 0 | 0 |
| Sweetness intensity | -0.500 | -0.188 | 0 |
| Lingering sweet aftertaste | 0.125 | 0.188 | 0 |
| Bitterness intensity | -0.250 | -0.188 | 0 |
| Lingering bitter aftertaste | -0.188 | -0.188 | 0 |

**Table 12**

| | A D-Allulose + Reb M | B D-Arabinose + Reb M | Control 2 |
|---|---|---|---|
| Quickness in sweetness onset | 0.167 | 0.333 | 0 |
| Sweetness intensity | -0.167 | -0.167 | 0 |
| Lingering sweet aftertaste | 0 | 0 | 0 |
| Bitterness intensity | -0.667 | 0 | 0 |
| Lingering bitter aftertaste | -0.833 | 0 | 0 |

### [Example 5] Evaluation on sucrose, sucralose, D-arabinose, and L-arabinose in the co-presence with sweet taste receptor (T1R2/T1R3) inhibitor

### Experimental method

The evaluation was carried out by those (3 persons) who received sensory trainings as panelists. Sucrose (manufactured by Pacific Sugar Mfg. Co., Ltd.), sucralose, D-arabinose (purity 98.0% or more), L-arabinose (100% pure powder, distributor: AIKA CO., LTD.), and lactisole were dissolved in pure water in the ratios shown in Table 13 to prepare beverage samples (sample solutions 1 to 4). The sweetness intensity of each sample solution was designed to be about the same degree, with the sweetness intensity of sucralose being 538.54 times as much as that of sucrose, the sweetness intensity of D-arabinose and L-arabinose being 0.6 times as much as that of sucrose. Additionally, solutions having the same composition as sample solutions 1, 2, 3, and 4 except that lactisole was not added were used as control solutions 1, 2, 3, and 4. The sensory evaluation was carried out by spitting test. The sweetness intensity was rated by the VAS scale and calculated with the intensity of a solution to which lactisole was not added being 100% and the sweetness intensity of a solution to which lactisole was added as a relative value (%). The sweetness inhibitory effect by lactisole was verified by this.

**Table 13**

| Control | Control solution 1 | Control solution 2 | Control solution 3 | Control solution 4 | Sample solution 1 | Sample solution 2 | Sample solution 3 | Sample solution 4 |
|---|---|---|---|---|---|---|---|---|
| Sucrose (w/v%) | 8 | 0 | 0 | 0 | 8 | 0 | 0 | 0 |
| Sucralose (ppm) | 0 | 149 | 0 | 0 | 0 | 149 | 0 | 0 |
| D-Arabinose (w/v%) | 0 | 0 | 13.3 | 0 | 0 | 0 | 13.3 | 0 |
| L-Arabinose (w/v%) | 0 | 0 | 0 | 13.3 | 0 | 0 | 0 | 13.3 |
| Lactisole (ppm) | 0 | 0 | 0 | 0 | 100 | 100 | 100 | 100 |

### Results

The results are shown in Table 14 and Figure 8 (average value of n=3). As shown in Figure 8, with the sweetness intensity in the case of lactisole free (0 ppm) being 100%, sucralose substantially lost the sweetness intensity (8.99%) when 100 ppm of lactisole was added. However, the sucrose solution, with the sweetness intensity in the case of lactisole free (0 ppm) being 100%, had the remaining sweetness intensity of 29.05% even when 100 ppm of lactisole was added. This demonstrated that the sweetness of a sweetener can be perceived by the human sensor even in the co-presence of lactisole, which is the sweet taste receptor (T1R2/T1R3) inhibitor. Similarly, L-arabinose and D-arabinose had the remaining sweetness intensities equal to or more than that of sucrose when 100 ppm of lactisole was added, and particularly, the sweetness intensity with D-arabinose had a high residual ratio.

**Table 14**

| Kind of sugar | Sweetness intensity residual ratio (%) with addition of 100 ppm lactisole |
|---|---|
| Sucrose | 29.05 |
| Sucralose | 8.99 |
| D-Arabinose | 42.47 |
| L-Arabinose | 34.43 |

## Claims

1. A beverage comprising 0.1 to 25 w/v% of D-arabinose.

2. The beverage according to claim 1, wherein a content of D-arabinose is 0.5 to 20 w/v%.

3. The beverage according to claim 1 or 2, further comprising a high-intensity sweetener.

4. The beverage according to claim 3, wherein the high-intensity sweetener comprises at least one selected from the group consisting of rebaudioside A, rebaudioside B, rebaudioside C, rebaudioside D, rebaudioside E, rebaudioside F, rebaudioside I, rebaudioside J, rebaudioside K, rebaudioside M, rebaudioside N, rebaudioside O, rebaudioside Q, rebaudioside R, Dulcoside A, Dulcoside C, rubusoside, steviolmonoside, steviolbioside, stevioside, luo han guo extract, mogroside V, thaumatin, brazzein, Glycyrrhiza extract, saccharine, aspartame, acesulfame K, sucralose, and a combination thereof.

5. The beverage according to claim 3 or 4, wherein a content of the high-intensity sweetener is 1 to 1,000 ppm.

6. The beverage according to any one of claims 1 to 5, further comprising sodium.

7. The beverage according to claim 6, wherein a content of the sodium is less than 50 mg/100 ml.

8. The beverage according to claim 6 or 7, wherein the sodium is included in at least one form selected from the group consisting of sodium chloride, sodium hydroxide, sodium malate, sodium sulfate, sodium citrate, sodium phosphate, sodium carbonate, sodium disulfide, sodium bicarbonate, sodium alginate, sodium argininate, sodium glucoheptonate, sodium gluconate, sodium glutamate, sodium tartrate, sodium aspartate, sodium lactate, casein sodium, sodium ascorbate, and a mixture thereof.

9. The beverage according to any one of claims 1 to 8, further comprising a low-intensity sweetener.

10. The beverage according to claim 9, wherein the low-intensity sweetener comprises at least one selected from the group consisting of glucose, sucrose, fructose, maltose, an oligosaccharide, a high-fructose corn syrup, lactose, psicose, allose, tagatose, and a combination thereof.

11. The beverage according to claim 9 or 10, wherein a content of the low-intensity sweetener is an amount corresponding to a sweetness intensity of 0.1 to 5.9 in terms of sucrose.

12. The beverage according to any one of claims 1 to 11, wherein an energy is 50 Kcal/100 ml or less.

13. A 2 to 10-fold concentrate of the beverage according to any one of claims 1 to 12.

14. A sweetener composition comprising D-arabinose and one or more high-intensity sweeteners.

15. A method for improving a taste quality of a beverage, comprising adding D-arabinose, a high-intensity sweetener, and sodium to the beverage.
